# EUROPEAN PATENT APPLICATION

(11) **EP 3 098 952 A2**
(43) Date of publication of application: **30.11.2016**
(21) Application number: 16168505.2
(22) Date of filing: 05.05.2016
(51) Int. Cl.: H02M 1/15

(54) **LOW CAPACITANCE DRIVE WITH IMPROVED IMMUNITY**

(30) Priority: 05.05.2015 GB 201507685
(71) Applicant: Control Techniques Ltd, Newtown, Powys SY16 3BE (GB)
(72) Inventor: WEBSTER, Antony John, Powys SY16 3BE (GB); HART, Simon David, Powys SY16 3BE (GB)
(74) Representative: Morrall, Jonathan Ian McLachlan

(57) **Abstract**

A supply voltage compensation circuit comprising a processor arranged to sense a signal indicative of a supply voltage on an input wherein if the signal indicates that the supply voltage is under a predetermined threshold, the processor is arranged to provide an output signal arranged to couple an auxiliary energy source to provide voltage compensation for supply under voltage.

## Description

This invention relates to smoothing a power supply with a low capacitance capacitor bank. It is particularly suitable for, but by no means limited to, use with a variable stage drive comprising a DC-link such as an inverter driver for a motor control.

### Background

In a variable speed drive, typically, power electronics rectify an AC supply to form a high voltage DC link. An inverter output stage with PWM (Pulse Width Modulation) control is used to generate controlled outputs of voltage and frequency. The input supply frequency is fixed, say for example 50/60Hz, but the output can be controlled from 0Hz (DC) to hundreds of Hz+. The output is typically used to drive a motor at a speed related to the frequency at the inverter output - thus the term variable speed.

In variable speed drives, an electrolytic capacitor bank smoothing the DC link of the drive may be replaced with a low capacitance film capacitor. Such systems would typically use a film capacitance which is 3-5% of the value of that required for an electrolytic capacitor bank. Film capacitors offer comparably higher ripple current carrying capabilities and operating voltages. Paralleled strings of capacitors can be replaced with a low number of paralleled film capacitors. Thus realising a much more compact and cost effective solution. A very significant advantage over electrolytic designs is a large reduction of conducted harmonic currents in the ac lines. International standards restricting line harmonics can be met with little or no additional chokes in the AC lines or DC link. Overall this allows lower cost manufacture, reduced system footprint, and a reduced number of components that must undergo failure testing in order to meet industry standards for approval.

However, many drive manufacturers have moved away from this approach for reasons including an unacceptable response to surges on the mains supply, and/or dips or loss of the supply leading to frequent under voltage trips.

The above reasons have led to a perception of lower reliability and performance of drives using a low capacitance film capacitor.

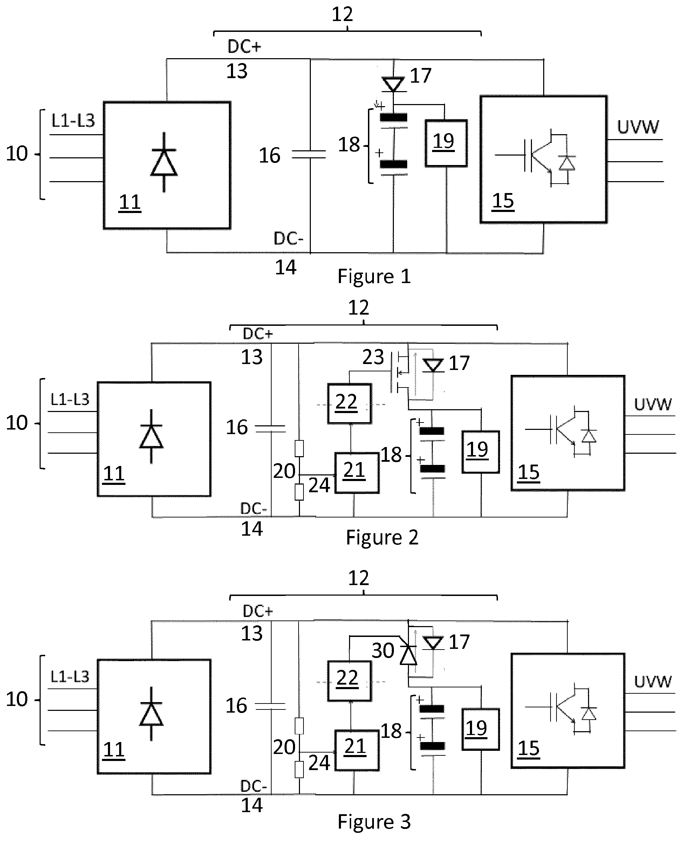

Figure 1 illustrates such a system in the form of an AC-DC-AC drive 1. In this example, a power supply 10 which may comprise a three-phase AC supply is rectified by rectifier 11 to produce DC-link 12. DC-link 12 comprises a DC+ line 13 and a DC- line 14 which power inverter 15 as would be understood. Power film capacitor 16, which may comprise a plurality of film capacitors is coupled between DC+ 13 and DC- 14. Typically, for low power drives, power film capacitor 16 may be collectively a value as low as a few micro-Farads (uF) for a few kW of power, for example around 10uF for up to around 2.2kW of power. Larger power drives (10's of kW of power) may comprise a power film capacitor of a collective value less than one hundred uF. A comparable drive with electrolytic capacitors without a choke would be the order of milli-Farads(mF) of capacitance.

The anode of a diode 17 is coupled to DC+ 13 and the cathode of diode 17 is coupled to the positive side of an electrolytic capacitor bank 18 which may comprise one or more electrolytic capacitors in a series and/or parallel arrangement. The negative side of the capacitor bank 18 is coupled to DC-14. An auxiliary power supply 19 which may be a switched mode power supply (SMPS), or a high voltage linear regulator for example, is coupled to the cathode side of diode 17.

In the arrangement of figure 1, under normal operation, the power flow to the inverter 15 is smoothed only by the power film capacitor 16.

As is understood, film capacitors have very high ripple current ratings compared to electrolytic capacitor banks and therefore a much smaller capacitance can be selected based on the ripple voltage/dynamic control requirements. The amount of capacitance required to smooth a DC-link is directly related to the voltage ripple (typically 100-300Hz) sitting on top of the dc supply as is understood. Low capacitance drives (for example with a power film capacitor 16) will have higher ripple and therefore lose voltage on the DC link under conditions of high or excessive load. The loss of volts is usually related to (and associated with) poorer performance.

Should there be a surge in the three phase power supply causing a spike or surge on the DC-link 12, the spike is conducted through the diode. The electrolytic capacitor bank 18 is used to clamp the spike and provide any excess power to the auxiliary power supply 19.

With the arrangement of figure 1, if there is a dip, glitch or loss event in supply 10, the drive 1 may trip and interrupt operation even if the event is short. Such trips are often considered to be nuisance trips that are perceived as poor reliability in the drive 1.

Accordingly, it is desired to provide a drive with a reduced susceptibility to such nuisance trips, and increased immunity to supply variation.

### Summary

According to a first aspect there is provided a supply voltage compensation circuit as defined in Claim 1 of the appended claims. Thus there is provided a supply voltage compensation circuit comprising a processor arranged to sense a signal indicative of a supply voltage on an input wherein if the signal indicates that the supply voltage is under a predetermined threshold, the processor is arranged to provide an output signal arranged to couple an auxiliary energy source to provide voltage compensation for supply under voltage.

Optionally, the circuit the processor is further arranged to provide an output signal to couple a path to absorb surges if the signal indicates that the supply voltage is over a predetermined threshold.

Optionally, the auxiliary energy source comprises a capacitor bank, and optionally the capacitor bank is an electrolytic capacitor bank.

Optionally, the circuit further comprises a thin film capacitor bank for providing supply smoothing.

Optionally, the processor is isolated from the supply.

Optionally, the circuit further comprises a diode arranged to provide a discharge path for a surge in the supply voltage.

Optionally, the circuit further comprises one of a MOSFET, an IGBT, a thyristor and a bidirectional switch for coupling the auxiliary energy source.

Optionally, the bidirectional switch provides compensation for supply under voltage and/or over voltage.

Optionally, the processor is arranged to detect that the signal indicates that the supply voltage is under a predetermined threshold before a lower under-voltage supply threshold is reached.

Optionally, the processor is arranged such that if the signal indicates a return to normal supply voltage, the processor is arranged to provide an output signal arranged to uncouple the auxiliary energy source to remove the voltage compensation.

Optionally, the voltage is a DC link voltage.

According to a second aspect there is provided a method as defined in claim 10. Accordingly, there is provided a method of supply voltage compensation comprising the steps of sensing a signal indicative of a supply voltage wherein if the signal indicates that the supply voltage is under a predetermined threshold, providing a signal to couple an auxiliary energy source to provide voltage compensation for supply under voltage.

Optionally, the method further comprises the step of coupling a path to absorb surges if the signal indicates that the supply voltage is over a predetermined threshold.

Optionally, the step of detecting that the signal indicates that the supply voltage is under a predetermined threshold occurs before a lower under-voltage supply threshold is reached.

Optionally, the method further comprises the step of detecting that the signal indicates a return to normal supply voltage and providing an output signal arranged to uncouple the auxiliary energy source to remove the voltage compensation.

According to a third aspect there is provided a computer readable medium comprising instructions that when executed by a processor cause the processor to carry out the method according to any of the above.

According to a fourth aspect there is provided a computer program product comprising instructions that when executed by a processor cause the processor to carry out the method according to any of the above.

With all the aspects, preferable and optional features are defined in the dependent claims.

### Brief Description of the Drawings

Embodiments will now be described, by way of example only, and with reference to the drawings in which:
Figure 1 illustrates a known drive arrangement including a film capacitor bank and an auxiliary electrolytic capacitor bank supplied via a diode;
Figure 2 illustrates a drive arrangement including a film capacitor bank and an auxiliary electrolytic capacitor with a power MOSFET switch and diode connecting the two banks according to an embodiment;
Figure 3 illustrates a drive arrangement including a film capacitor bank and an auxiliary electrolytic capacitor with a thyristor switch and diode connecting the two banks according to an embodiment;
Figure 4 illustrates various waveforms as would be present in the prior art system of Figure 1; and
Figure 5 illustrates various waveforms as would be present according to embodiments.

In the figures, like elements are indicated by like reference numerals throughout.

### Overview

Prevention of the undesirable nuisance trips and other supply related effects is provided by smoothing the DC link 12 by controlling a connection between the power film capacitor(s) 16 and an auxiliary energy source comprising electrolytic capacitor bank 18 and/or an auxiliary power supply 19.

As a result, energy may be provided in the event of a loss in supply 10, thus avoiding trips that are perceived as a nuisance or poor reliability.

Functionality is provided by connecting a power switch in parallel with diode 17. This allows the transfer of charge from the auxiliary capacitor bank 18 to be shared with the lower value power film capacitor(s) 16 as required to support the dc link 12 and avoid tripping in the event of a loss of supply. Hence voltage compensation of the DC link 12 is achieved.

### Detailed Description

Turning to figure 2, power switching device 23 (for example an n-channel power MOSFET) is coupled in parallel with surge diode 17 and also between DC+ connection 12 and the positive side of electrolytic capacitor bank 18. Optionally, the switching device 23 and surge diode 17 may be positioned between the DC- connection 13 and the negative side of electrolytic capacitor bank 18. Other capacitor technologies that have a greatly increased capacitance or energy storage capability relative to the power film capacitor 16 (described in relation to figure 1) may be used for capacitor bank 18, for example polymer,Li-ion, electric double layer, hybrid,ultra or super capacitor technology could be used where appropriate. Gate driver 22 is coupled to the gate of power switching device 23 and is controlled by a controller 21 which may comprise a micro-controller, microprocessor or any other programmable device such as an FPGA or PLD. In the embodiment of figure 2, controller 21 is referenced to the DC bus, and monitors a signal, Vsense 24 indicative of the DC link voltage between DC+ 12 and DC- 13 in order to detect the status of the power supply 10. Controller 21 uses an input port to monitor Vsense 24. The input port may comprise an analog input port, or an ADC input port. In the embodiment of figure 2, the DC link voltage is monitored at a point between two sense resistors 20 that are coupled in series between DC+ and DC-. As controller 21 is referenced to the DC bus, no isolation is required between the sense resistors and the controller.

Typically, a trip occurs due to the dc link voltage dropping below an under voltage threshold. The threshold is set well below the point expected during normal operation. Below this threshold the drive output is disabled and inrush protection is in operation to limit the surge generated by the returning supply. Typical values for reference are shown in table 1 below:

**Table 1**

| AC Supply Voltage | Typical DC link voltage | Under voltage Threshold |
|---|---|---|
| 230 | 320 | 175 |
| 400 | 555 | 330 |

The sense circuit shown is low cost, and as would be known, voltage feedback would already be used for the motor control system, and therefore can be utilised for providing a signal indicative of the DC link voltage without requiring any further resources such as PCB real-estate or additional component count.

Alternatively, a signal indicative of the DC ink voltage could be obtained with a micro-controller isolated from the DC bus but with the isolation provided in the sensor, for example a transformer or linear isolator.

Absence of supply 10 may also be detected by monitoring the AC supply line 10 voltages and/or rectifier 11 currents but with possible increased complexity and/or additional cost of isolation as would be understood.

The controller 21 and gate driver 22 may be isolated from the DC link voltage for safety as would be understood, possibly by way of an optocoupler or other isolation device between the gate driver and the power switching device 23 (thyristor 30 of figure 3). Alternatively, the controller 21 may be referenced to the DC link, for example the DC- bus 14, with controller 21, gate driver 22 and power switching device 23 operating at the DC link potential. Controller 21 may drive the gate directly without the need for gate driver 22.

The Vsense signal 24 should be able to track glitches in the DC link voltage 12 with a fast enough response time so that glitches that may be present on the DC link that it is monitoring are visible. Typically the Vsense signal is monitored at a rate in the order of at least a few kHz with a suitable response time sufficient to protect and provide compensation for the DC link voltage. For example, a sense resistor network 20 may comprise shunt resistor(s) to divide down the high voltage of the DC link to produce a proportional representation of DC link voltage. The resistor coupled to DC+ 12 would typically be the order of few hundred kOhms to MOhms and the resistor coupled to DC- 13, a few kOhm in order to scale the Vsense signal within the limits of the controller 21 input port utilised to sense the maximum DC link voltage expected.

If controller 21 detects a Vsense signal indicative of a dip, loss or other glitch resulting in a reduction in the voltage of DC link 12, controller 21 can provide a signal to gate driver 22 to cause the power switching device 23 to be turned on (closed) for the duration of the DC link reduction and hence auxiliary energy (charge) can be provided by the electrolytic capacitor bank 18 and/or the auxiliary power supply 19 (an auxiliary energy source) by way of the auxiliary energy source being coupled to the main capacitor bank 16. Controller 21 continues to monitor the Vsense signal 24, and when the controller detects that the Vsense signal is indicative of a return to normal DC link voltage, the controller can provide a signal to gate driver 22 to cause the power switching device 23 to be turned off (opened) and hence uncoupling the auxiliary energy source from the main capacitor bank 16.

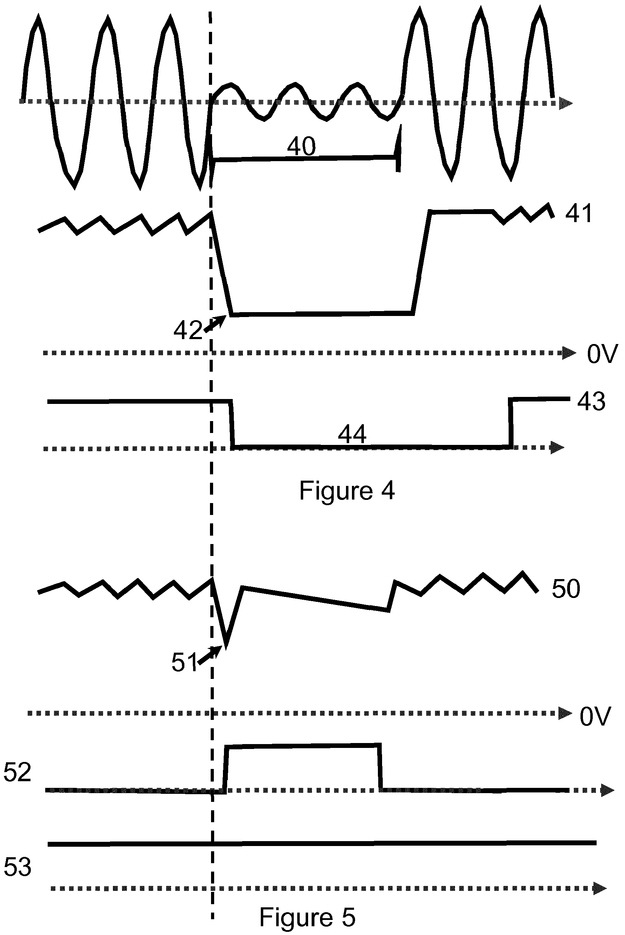

As a result, the DC-link voltage is compensated and within tolerances. Hence, the DC-link voltage is kept high enough and for long enough to keep the product in operation and avoid nuisance trips. Typically there is a voltage threshold which if dropped below, the drive will stop and/or trip (see figure 4 and table 1). In order for continued operation, the DC-link does not have to particularly smooth but should stay above the voltage threshold, (the 'under voltage' lockout threshold). Once compensation has occurred, the capacitor bank 18 will have been discharged to a certain degree. The capacitor bank is charged from the DC-link voltage 12 (DC+ 13, DC- 14) derived from supply 10 via rectifier 11 as would be understood.

Rather than relying on surge diode 17 (which may be a parasitic diode of an N-channel MOSFET), in an alternative embodiment where a second thyristor in opposite arrangement (polarity) to thyristor 30 replaces the surge diode 17 of figure 3, if the Vsense signal indicates a spike in DC link 12, controller 21 can provide a signal to gate driver 22 to cause the second thyristor to be turned on (closed) for the duration of the spike and hence the excess energy (charge) can be absorbed by the electrolytic capacitor bank 18 and/or the auxiliary power supply 19. As a result, the DC link voltage remains within tolerances. In an alternative embodiment, a bi-directional switch may be used rather than the two thyristors of the above embodiment. In such an embodiment, an additional source of current is provided for the auxiliary supply 19. This may be provided by a resistor, for example, in parallel with the switch. In embodiments where diode 17 is present (which may be parasitic), the additional source of current for auxiliary supply 19 is optional.

Turning to Figure 4, various waveforms are shown as would be present in the prior art system of Figure 1. One of the three phases of power supply 10 is illustrated as having a dip or supply low period 40 which may typically be up to 5 to 10 mains cycles. As a result, the DC link voltage (DC+ 13 with respect to DC- 14) which may be typically around 500-600V, suffers a corresponding low period (waveform 41). At point 42 which may be less than 1 ms from when the DC link voltage initially starts to decrease, a trip can occur which may be at approximately 330V. At this point, the drive is no longer active, and inverter 15 produces no output (waveform 43 where the low period 44 denotes no output by inverter 15). Such a loss of inverter output would be considered a nuisance trip and a perceived lack of reliability and poor quality of the drive in question.

Figure 5 illustrates the situation with embodiments of the present disclosure. The waveforms of Figure 5 are illustrated in time alignment with the waveforms of Figure 4 for comparison. In figure 5, at a time after a fall in the DC link voltage is detected by controller 21 on the Vsense signal 24 at point 51 sufficient to avoid a nuisance trip as discussed earlier, gate drive signal 22 is provided as shown in waveform 52 to allow electrolytic capacitor bank 18 and/or the auxiliary power supply 19 to provide charge to the main capacitor bank 16 which, in turn, provides voltage smoothing (compensation) to the DC-link voltage (waveform 50) and a nuisance trip is avoided. The inverter 15 remains in operation, and the glitch, or low level on the power supply 10 is invisible to the inverter 15 as shown by waveform 53 where the high level denotes that inverter 15 remains in operation throughout. Further, with such a voltage compensation, the drive as a whole can respond to the DC link event and back off the load to avoid a further DC link voltage drop, or recover energy from the motor load as would be understood in addition to the voltage compensation scheme described herein. Controller 21 may be a separate controller not involved in other activity of the inverter driver, or may also be concerned with providing control signals for inverter 15 in order for inverter 15 to operate.

The point of switching of the power switching device 23 in relation to any glitch that is detected on the Vsense signal may be controlled based on application requirements such as the minimum DC-link voltage required and/or the duration of voltage dip, loss or other glitch that can be tolerated for operation to be maintained.

In other embodiments, power MOSFET 23 may be replaced by a thyristor (figure 3) or other power switching device such as an IGBT, or other bi-directional switching device. Choice of power switching device may be influenced by size, cost and robustness. For example, MOSFET 23 could be chosen for reasons of cost and size and would typically be suited to small low power products where the auxiliary capacitor bank is small. Conversely, a thyristor is a very rugged device and can handle the associated surge or I²t seen when discharging larger auxiliary capacitor banks before damage occurs to the switching device.

Benefits of the above disclosed system include reducing the susceptibility to spikes or dips of a film capacitor based drive on poor power supplies. The following additional benefits are also realised compared to drives comprising the known electrolytic based solution:
- Reduced size and cost due to smaller or no internal chokes.
- Negated or lower requirement for external line chokes which reduces cabinet space and system cost.
- More compact and lower cost system solution for applications requiring low harmonics. Typically, a low capacitance drive is not recommended for noisy environments owing to under-performance in relation to surges and/or nuisance trips. The disclosed technique solves these problems.
- Avoids nuisance trips that are perceived as poor reliability.
- Reduced vulnerability to supply conditions.

The various embodiments described above may be implemented by a computer program product. The computer program product may include computer code arranged to instruct a computer (processor) to perform the functions of one or more of the various methods described above. The computer program and/or the code for performing such embodiments may be provided to an apparatus, such as a computer (processor), on a computer readable medium or computer program product. The computer readable medium may be transitory or non-transitory. The computer readable medium could be, for example, an electronic, magnetic, optical, electromagnetic, infrared, or semiconductor system, or a propagation medium for data transmission, for example for downloading the code over the Internet. Alternatively, the computer readable medium could take the form of a physical computer readable medium such as semiconductor or solid state memory, magnetic tape, a removable computer diskette, a random access memory (RAM), a read-only memory (ROM), a rigid magnetic disc, and an optical disk, such as a CD-ROM, CD-R/W or DVD.

An apparatus such as a computer may be configured in accordance with such code to perform one or more processes in accordance with the various embodiments discussed herein.

## Claims

1. A supply voltage compensation circuit for a device, the device having an under voltage threshold below which an output of the device is disabled, the compensation circuit comprising a processor arranged to:
sense a signal indicative of a supply voltage on an input;
wherein, if the signal indicates that the supply voltage is under a predetermined threshold, the predetermined threshold being at a higher voltage than the under voltage threshold, the processor is arranged to provide an output signal arranged to couple an auxiliary energy source to provide voltage compensation for supply under voltage.

2. The circuit of claim 1 wherein the processor is further arranged to provide an output signal to couple a path to absorb surges if the signal indicates that the supply voltage is over a predetermined threshold.

3. The circuit of claim 1 wherein the auxiliary energy source comprises a capacitor bank, and optionally the capacitor bank is an electrolytic capacitor bank.

4. The circuit of any preceding claim wherein the processor is isolated from the supply.

5. The circuit of any preceding claim further comprising a diode arranged to provide a discharge path for a surge in the supply voltage.

6. The circuit of any preceding claim further comprising one of a MOSFET, an IGBT, a thyristor and a bidirectional switch for coupling the auxiliary energy source, and optionally wherein the bidirectional switch provides compensation for supply under voltage and/or over voltage.

7. The circuit of any preceding claim wherein the processor is arranged to detect that the signal indicates that the supply voltage is under a predetermined threshold before a lower under-voltage supply threshold is reached.

8. The circuit of any preceding claim wherein the processor is arranged such that if the signal indicates a return to normal supply voltage, the processor is arranged to provide an output signal arranged to uncouple the auxiliary energy source to remove the voltage compensation.

9. The circuit of any preceding claim wherein the voltage is a DC link voltage.

10. A method of supply voltage compensation for a device, the device having an under voltage threshold below which an output of the device is disabled, the method comprising the steps of:
sensing a signal indicative of a supply voltage;
wherein, if the signal indicates that the supply voltage is under a predetermined threshold, the predetermined threshold being at a higher voltage than the under voltage threshold, providing a signal to couple an auxiliary energy source to provide voltage compensation for supply under voltage.

11. The method according to claim 10 further comprising the step of coupling a path to absorb surges if the signal indicates that the supply voltage is over a predetermined threshold.

12. The method of any claim 10 or 11 wherein the step of detecting that the signal indicates that the supply voltage is under a predetermined threshold occurs before a lower under-voltage supply threshold is reached.

13. The method of any of claims 10 to 12 further comprising the step of detecting that the signal indicates a return to normal supply voltage and providing an output signal arranged to uncouple the auxiliary energy source to remove the voltage compensation.

14. A computer readable medium comprising instructions that when executed by a processor cause the processor to carry out the method according to any of claims 10 to 13.

15. A computer program product comprising instructions that when executed by a processor cause the processor to carry out the method according to any of claims 10 to 14.
